# EUROPÄISCHE PATENTSCHRIFT

(11) **EP 1 611 392 B1**
(45) Veröffentlichungstag und Bekanntmachung des Hinweises auf die Patenterteilung: **01.08.2007**
(21) Anmeldenummer: 04725328.1
(22) Anmeldetag: 02.04.2004
(51) Int. Cl.: F16M 5/00

(54) **AUS LÄNGS- UND QUERTRÄGERN BESTEHENDER RAHMEN ZUR LAGERUNG VON AGGREGATEN SOWIE VERFAHREN ZUR HERSTELLUNG DES RAHMENS**
FRAME CONSISTING OF LONGITUDINAL BEAMS AND TRANSVERSES FOR BEARING UNITS AND METHOD FOR PRODUCING SAID FRAME
CHASSIS CONSTITUE DE LONGERONS ET DE TRAVERSES CONCUS POUR SUPPORTER DES UNITES ET PROCEDE POUR PRODUIRE CE CHASSIS

(30) Priorität: 07.04.2003 DE 10316029
(43) Veröffentlichungstag der Anmeldung: 04.01.2006
(73) Patentinhaber: MTU FRIEDRICHSHAFEN GMBH, 88045 Friedrichshafen (DE)
(72) Erfinder: MURARESCU, Viktor-Marius, 6014 Littau (CH); ENGELS, Björn, 24340 Eckernförde (DE); HOPT, Andreas, 88048 Friedrichshafen (DE); SCHUCHARDT, Matthias, 88048 Friedrichshafen (DE)
(74) Vertreter: Winter, Josef
(86) Internationale Anmeldenummer: PCT/EP2004/003506
(87) Internationale Veröffentlichungsnummer: WO 2004/090413

(56) Entgegenhaltungen:
- DE-A- 4 315 694
- FR-A- 1 380 351
- US-A- 2 259 214
- US-A- 2 357 120

## Beschreibung

Es ist bekannt, Aggregate, wie beispielsweise Brennkraftmaschinen, auf einem aus Längs- und Querträgern bestehenden Rahmen zu lagern, um die Einleitung von Schwingungen, insbesondere auch Körperschall, in ein Fundament zu vermindern.

Ein derartiger Rahmen geht beispielsweise aus der DE 43 15 694 A1 als bekannt hervor. Der dort gezeigte Rahmen aus Längs- und Querträgern ist auf Gummipuffern gelagert, die an den vier Eckpunkten des Rahmens angeordnet sind. Auf dem Rahmen ist auf mehreren Lagern eine körperschallerzeugende Maschine, insbesondere eine Zentrifuge, gelagert. Zur schwingungsmäßigen Entkoppelung der Maschine vom Rahmen sind zwischen den Befestigungsmitteln der Aggregatelager und dem Grundrahmen Trennfugen ausgebildet, die mit einem körperschalldämmenden druckfesten Material, einem Beton- oder Mineralguss, ausgefüllt sind, das die Übertragung der Körperschallwellen auf die Profilträger weitgehend verhindern soll. In weiterer Ausbildung ist vorgesehen, die Profilträger zumindest in den Befestigungsbereichen der Aggregatelager mit dem schalldämmenden Material auszufüllen und dabei Teile der Befestigungsmittel in das körperschalldämmende Material einzulagern. Insbesondere ist auch vorgesehen, die hohlkastenförmigen Profilträger über ihrer gesamten Länge mit dem körperschalldämmenden Material auszufüllen. Somit scheint für eine wirksame Schalldämpfung bei dieser Konstruktion und Lageranordnung eine erhebliche Menge an körperschalldämmendem Material vonnöten zu sein. Im Weiteren ist es ohne umfangreiche Änderungen des zugrunde liegenden Konstruktionsprinzips offensichtlich nicht möglich, das Trägersystem an geänderte Beanspruchungsfälle anzupassen. Auch die Fertigung ist aufwendig, weil für die Befüllung in den Trägern Kammern ausgebildet werden müssen. Die Herstellung dieses Rahmens ist aber auch deshalb aufwendig und teuer, weil zur Herstellung der Trennfugen eine aufwendige Positionierung der schweren und sperrigen Träger erfolgen muss.

Der Erfindung liegt das Problem zu Grunde, einen Rahmen aufzuzeigen, der hinsichtlich der Übertragung von Schwingungen und insbesondere der Körperschallübertragung eine wirksame Dämpfung besitzt, der zugleich aber auch eine einfache und kostengünstige Herstellung erlaubt, und der in der Herstellung in einfacher Weise variabel an unterschiedliche Belastungsfälle anpassbar ist, ohne das zugrunde liegende Konstruktionsprinzip zu verlassen. Dieses Problem wird durch die in den Patentansprüchen aufgeführten Merkmale gelöst.

Eine wirksame Schwingungsdämpfung bei gleichzeitig einfacher und kostengünstiger Herstellungsmöglichkeit mit geringem Gewicht des Rahmens wird dadurch erreicht, dass die Rahmenlager und die Aggregatelager jeweils lotrecht übereinanderliegend angeordnet werden, und dass das körperschalldämmende Material in Form eines Blocks zwischen den Rahmenlagern und Aggregatelagern angeordnet ist. Durch diese Anordnung werden über die Aggregatelager in das körperschalldämmende Material eingeleitete hochfrequente Schwingungen auf dem Weg zum Rahmenlager durch die innere Dämpfung des körperschalldämmenden Materials wirksam gedämpft. Der Block aus körperschalldämmendem Material stellt eine große Masse dar, die genau dort angeordnet ist, wo sie gebraucht wird, nämlich im Bereich der Schwingungseinleitung. Auf diese Weise kann bei nur geringem Materialeinsatz eine optimale Dämpfung der nieder- und hochfrequenten Schwingungen erzielt werden. Durch diese Anordnung der Lager werden aber auch Beanspruchungen des Rahmens weitgehend reduziert. Denn auf Grund der lotrechten Anordnung von Aggregatelagern und Rahmenlagern übereinander werden die im Betrieb auftretenden dynamischen und statischen Kräfte ohne Umleitung über die Träger direkt in das Fundament eingeleitet. Die Rahmenteile können dadurch in der Dimensionierung klein und das Gewicht niedrig gehalten werden.

Die Ausbildung des körperschalldämmenden Materials in Form von zwischen Rahmen- und Aggregatelagern liegenden Blöcken hat außer funktionellen Vorteilen bezüglich der Schwingungsdämpfung, wie dargestellt, auch Vorteile in fertigungstechnischer Hinsicht. Es ergeben sich in der Logistik Kosteneinsparungen durch Standardisierung und vorgefertigte Elemente. Anpassungen des Rahmens an unterschiedliche Motor- Generator- und Getriebebauformen sind in einfacher Weise möglich. Es sind lediglich Standardprofile in Größe und Position anzupassen, ohne das Konstruktionsprinzip zu verlassen. Die Berechnung des Rahmens wird im Hinblick auf Festigkeit, Eigenfrequenzen und akustische Eigenschaften durch die Standardbauweise vereinfacht. Nicht zuletzt ist schließlich das Recycling einfach möglich, weil eine einfache sortenreine Trennung der unterschiedlichen Materialien möglich ist. Da nur wenige Teile des Rahmens mit Polymerbeton befüllt sind, können in großen Bereichen des Rahmens Befestigungen für zu haltende Geräte, Rohrleitungen etc. durch Schweißen hergestellt werden. Damit können teure Schraubverbindungen in großen Bereichen entfallen.

Nach Anspruch 2 können die erforderlichen Dämpfungen in einfacher Weise durch geeignete Dimensionierung der aus körperschalldämmendem Material bestehenden Blöcke an einen Beanspruchungsfall in der Herstellung variabel angepasst werden, ohne das Konstruktionsprinzip des Rahmens zu verlassen. Gemäß Anspruch 3 werden die Aggregatelager ohne Rahmenkontakt an dem Block aus körperschalldämmendem Material angebracht.

Gemäß Anspruch 4 werden die Blöcke durch Umgießen von Rahmenbereichen, insbesondere der Knotenbereiche (Anspruch 5), in denen sich Längs- und Querträger treffen, gebildet.

Nach Anspruch 6 werden zur Aufnahme der Blöcke Hohlprofile verwendet, in die das körperschalldämmende Material eingefüllt wird. Diese Hohlprofile sind lotrecht im Rahmen stehend angeordnete Elemente, die ohne Rahmenänderung variabel an verschiedene Beanspruchungsfälle anpassbar sind. Gemäß Anspruch 7 können die Hohlprofile aus einem Strangpressprofil oder gemäß Anspruch 8 aus einem Gussteil gebildet sein. Die Hohlprofile sind gemäß Anspruch 9 in Rahmenausschnitte des Rahmens eingesetzt oder gemäß Anspruch 10 zwischen den Rahmenteilen angeordnet. Letztere Ausbildung hat den Vorteil, dass höhere Massen darstellbar sind. Die Hohlprofile können durch Schweißen gemäß Anspruch 11 oder durch Verschraubung gemäß Anspruch 12 mit dem Rahmen verbunden werden. Beim Schweißen ist allerdings darauf zu achten, dass durch geeignete konstruktive Maßnahmen ein hoher Wärmeeintrag in den Polymerbeton vermieden wird.

Beispielsweise sind die Hohlprofile mit geeigneten Laschen zu versehen, damit die Schweißung hohlprofilfern erfolgen kann. Es können aber auch Schweißverfahren mit geeigneten Kühlmaßnahmen gewählt werden, um die Wärmeentwicklung gering zu halten. Ansonsten können die Hohlprofile natürlich auch vor dem Verfüllen mit Polymerbeton mit dem Rahmen verschweißt werden, womit dann allerdings montagemäßige Nachteile in Kauf genommen werden müssen. Die Oberfläche des aus körperschalldämmendem Material bestehenden Blocks kann nach Anspruch 13 aggregatelagerseitig mit einer Distanzplatte versehen sein, die das Hohlprofil berührungslos überragt.

Ein wesentlicher Vorteil des Herstellungsverfahrens besteht bei Verwendung von Hohlprofilen darin, dass das körperschalldämmende Material gemäß Anspruch 14 in die Hohlprofile eingefüllt wird, bevor die Hohlprofile mit dem Rahmen verbunden werden. Wie schon erwähnt, ist das Handling in der Montage vereinfacht, weil die Herstellung der mit körperschalldämmendem Material verfüllten Blöcke ohne Anwesenheit des kompletten Rahmens erfolgen kann.

Ein Ausführungsbeispiel der Erfindung ist in der Zeichnung dargestellt und wird im Folgenden näher beschrieben.

Es zeigen:
- Fig. 1: Eine räumliche Ansicht eines Rahmens mit einem in einer Explosionsansicht dargestellten Lagerblock;
- Fig. 2: Eine Ansicht einer geschraubten Befestigung für den Lagerblock;
- Fig. 3: Eine räumliche Ansicht eines Rahmens, bei dem die Blockbildung durch Umgießen von Rahmenbereichen mit schalldämmendem Material erfolgt.

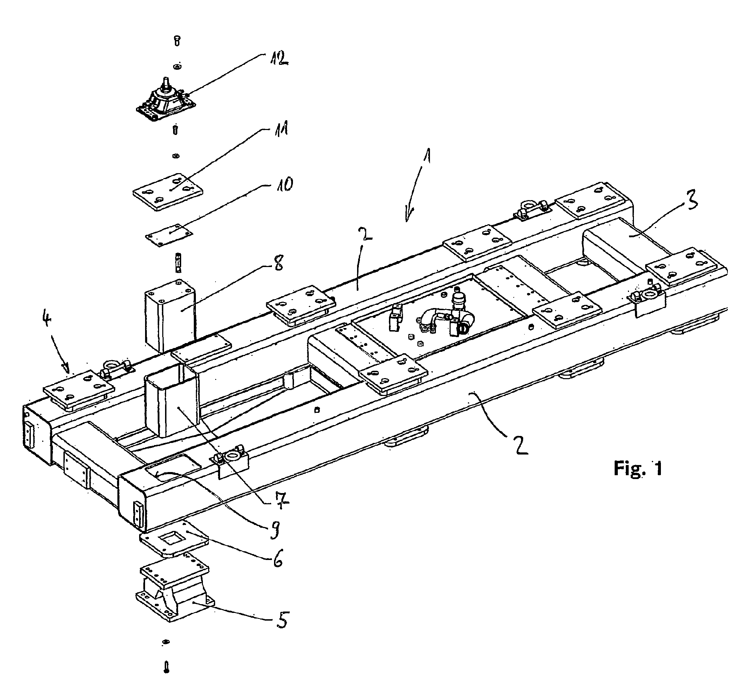

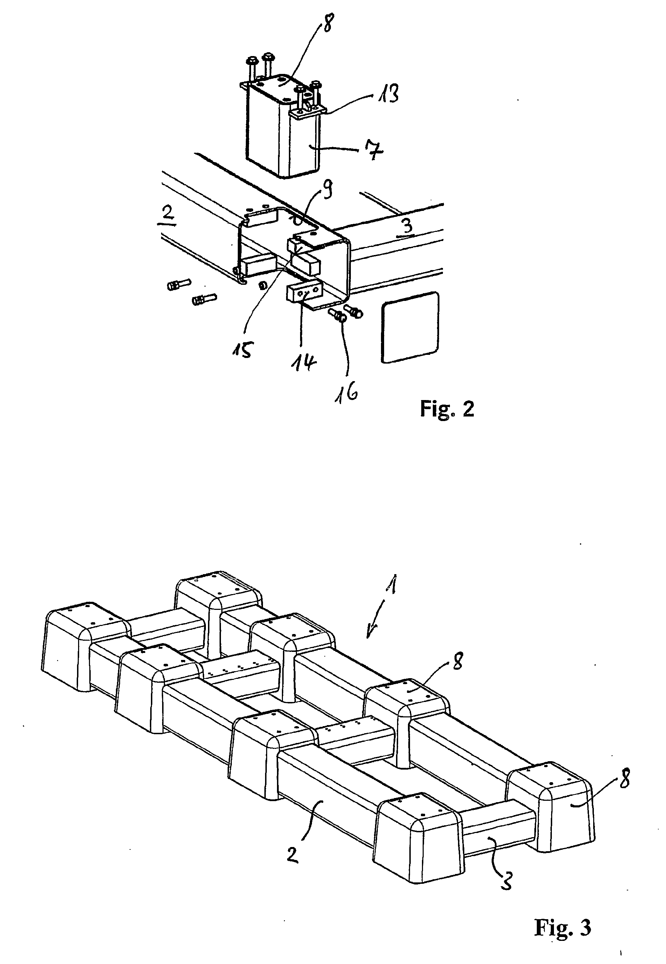

Der in Figur 1 dargestellte Rahmen 1 ist aus zwei Längsträgern 2 und mehreren Querträgern 3 aufgebaut. Zur Lagerung eines nicht dargestellten Aggregats, beispielsweise einer Brennkraftmaschine mit einem Generator, dienen acht Lagerblöcke 4, die an den Längsträgern 2 angeordnet sind. Die Einzelteile eines Lagerblocks 4 sind in einer Explosionsansicht dargestellt. Die Lagerung des Rahmens 1 auf einem nicht dargestellten Fundament erfolgt auf Rahmenlagern 5. Die Rahmenlager 5 bestehen aus Platten, zwischen denen elastische Gummielemente liegen. Die Rahmenlager 5 werden über eine Zwischenplatte 6 mit den Längsträgern 2 verschraubt. In den Längsträgern 2 sind Rahmenausschnitte 9 vorgesehen, die zur Aufnahme von Hohlprofilen 7 dienen. Die Hohlprofile 7 sind mit Reaktionsharzbeton verfüllt, der in Form von Blöcken 8 in den Hohlprofilen 7 liegt. Vorzugsweise werden die Hohlprofile 7 vor dem Einsetzen in die Rahmenausschnitte 9 mit dem Reaktionsharz ausgegossen, da dadurch das Handling in der Montage wesentlich erleichtert wird. Werden die Hohlprofile 7 jedoch durch Schweißen in dem Rahmen 1 befestigt, so sind Maßnahmen zur Verhinderung eines übermäßigen Wärmeeintrags in das Reaktionsharz vorzusehen. Vorzugsweise kann dies durch konstruktive Maßnahmen geschehen, indem beispielsweise für geeignete Wärmeableitungsmaßnahmen gesorgt wird und /oder der Schweißort durch entsprechende Gestaltung aus dem unmittelbaren Bereich der Hohlprofile 7 wegverlegt wird. Dazu können an den Hohlprofilen 7 beispielsweise Laschen (entsprechend Figur 2) angebracht sein, die am Rahmen 1 festgeschweißt werden. Die Hohlprofile 7 müssen starr mit dem Rahmen 1 verbunden sein, um Bewegungen der Träger gegen die Lager zu verhindern. Die starr mit den Trägern verbundenen Hohlprofile 7 gleichen die durch die Rahmenausschnitte bedingte Schwächung der Träger aus. Die Motorlager 12 werden über eine Platte 11 und eine Distanzplatte 10 am Block 8, beispielsweise durch Gewindedübel befestigt. Die Abmessungen der Distanzplatte 10 sind so gewählt, dass keine Berührung mit den Wandungen des Hohlprofils 7 zustande kommt, und dass die Distanzplatte 10 den oberen Rand des Hohlprofils 7 überragt. Dadurch ist sichergestellt, dass die Platte 11, die das Motorlager 12 trägt, mit dem Metall des Hohlprofils 7 nicht in Berührung kommt.

Die Figur 2 zeigt eine Anordnung von Befestigungsmitteln, die es erlauben das Hohlprofil 7 durch eine Verschraubung in einem Rahmenausschnitt 9 festzulegen. Eine Verschraubung hat den Vorteil, dass keine Wärmeeinwirkung wie beim Schweißen auftritt, so dass der Einbau der mit Reaktionsharz verfüllten Hohlprofile 7 gänzlich unproblematisch ist. Die Hohlprofile 7 werden mit Laschen 13 und Leisten 15 am Rahmen 1 festgelegt. Im weiteren dienen im Längsträger 2 eingeschweißte Leisten 14 als Widerlager für darin eindrehbare Schrauben 16. Zwischen den eingedrehten Schrauben 16 werden die Hohlprofile 7, die Spiel zu den Rahmenausnehmungen 9 besitzen, unbeweglich eingespannt.

In Figur 3 ist in räumlicher Darstellung eine weitere Ausführungsform eines erfindungsgemäßen Rahmens 1 dargestellt. Die Blöcke 8 aus schalldämmendem Material werden hier durch Umgießen der von den Längs- und Querträgern 2, 3 gebildeten Knotenbereiche hergestellt. Hierfür werden in den Knotenbereichen Gussformen angeordnet, die mit Polymerbeton ausgegossen werden. Nach dem Entfernen der Gussformen können die Aggregatelager 12 und die Rahmenlager 5 ohne Metallberührung im Polymerbeton verschraubt werden. Vorteil dieser Konstruktion ist, dass erheblich höhere Massen im Bereich der Lagerblöcke dargestellt werden können, was die körperschalldämmenden Eigenschaften des Rahmens 1 wirksam verbessert.

Allen Ausführungsformen ist gemeinsam, dass die Aggregatelager 12 jeweils lotrecht über den Rahmenlagern 5 liegen. Durch die direkte Ableitung der aus den Massenkräften resultierenden Kräfte in das Fundament in Verbindung mit einer großen Masse, die von den mit Reaktionsharzbeton ausgefüllten Hohlprofilen 7 bzw. den umgossenen Knoten dargestellt wird, wird die Anregung von Biegeschwingungen des Rahmens 1 weitgehend vermieden. Die Körperschallisolierung wird dadurch verbessert, dass die Übertragung des Körperschalls ausschließlich über das Füllmaterial erfolgt, welches im Vergleich zu Stahl über eine hohe innere Dämpfung verfügt. Es besteht keine direkte Stahl-Verbindung zwischen oberer und unterer Lagerungsebene. Die notwendige Dämpfung kann in einfacher Weise dadurch angepasst werden, dass die Höhe der Blöcke 8 aus körperschalldämmendem Material verändert wird, was in einfacher Weise ohne Änderung der Rahmenteile möglich ist. Insbesondere lassen sich auch die Massen der aus Stahl bestehenden Hohlprofile 7 und der Blöcke 8 in einem großen Bereich auf die erwarteten Massekräfte einstellen.

Durch die erfindungsgemäße Ausführung des Rahmens ergeben sich erhebliche Gewichtseinsparungen. Es ergeben sich auch Kostenvorteile durch eine vereinfachte Fertigung. Eine besondere Fertigungsvereinfachung wird erreicht, wenn gemäß einer bevorzugten Ausführung die Hohlprofile 7 mit Polymerbeton verfüllt werden, bevor sie im Rahmen 1 angebracht werden. Statt der kompletten Rahmen müssen lediglich die Hohlprofile 7 zum Verfüllen mit Polymerbeton transportiert werden.

Nicht zuletzt ergeben sich auch auf Grund der Baukastenbauweise fertigungstechnische Vorteile. Die Rahmen sind durch einfache Anpassungen in Größe und Position an unterschiedliche Motor-, Generator- und Getriebebauformen anpassbar ohne Änderung des zu Grunde liegenden Konstruktionskonzepts.

## Patentansprüche

1. Aus Längs- (1) und Querträgern (3) bestehender Rahmen (1) zur Lagerung von Aggregaten, mit Rahmenlagern und Aggregatelagern wobei der Rahmen (1) auf den Rahmenlagern (5) gelagert ist und das Aggregat auf dem Rahmen (1) auf Aggregatelagern (12) gelagert sein kann, wobei Rahmenbereiche mit körperschalldämmendem Material verbunden sind, auf dem die Aggregatelager (12) ohne direkten Rahmenkontakt gelagert sind,
**dadurch gekennzeichnet,**
**dass** die Rahmenlager (5) und die Aggregatelager (12) jeweils lotrecht übereinander liegen, und dass das körperschalldämmende Material jeweils in Form von Blöcken (8) zwischen Rahmenlagern (5) und Aggregatelagern (12) angeordnet ist.

2. Rahmen nach Anspruch 1,
**dadurch gekennzeichnet,**
**dass** die Abmessungen, insbesondere die Höhe, des aus körperschalldämmendem Material bestehenden Blocks (8) entsprechend der erforderlichen Dämpfung bemessen sind.

3. Rahmen nach Anspruch 2 oder 3,
**dadurch gekennzeichnet,**
**dass** die Aggregatelager (12) ohne Rahmenkontakt lösbar an dem Block (8) aus körperschalldämmendem Material befestigt sind.

4. Rahmen nach einem der Ansprüche 1 bis 3,
**dadurch gekennzeichnet,**
**dass** die Blöcke (8) durch Umgießen von Rahmenbereichen mit dem körperschalldämmenden Material gebildet sind.

5. Rahmen nach Anspruch 4,
**dadurch gekennzeichnet,**
**dass** die Blöcke (8) im Bereich von Knoten aus Längs- (1) und Querträgern (3) angeordnet sind.

6. Rahmen nach einem der Ansprüche 1 bis 3,
**dadurch gekennzeichnet,**
**dass** das körperschalldämmende Material in Hohlprofile (7) aus Metall eingefüllt ist, die lotrecht stehend im Rahmen (1) integriert sind.

7. Rahmen nach Anspruch 6,
**dadurch gekennzeichnet,**
**dass** die Hohlprofile (7) aus einem Strangpressprofil gebildet sind.

8. Rahmen nach Anspruch 6,
**dadurch gekennzeichnet,**
**dass** die mit einem körperschalldämmenden Material verfüllten Hohlprofile (7) aus einem Gussteil gebildet sind.

9. Rahmen nach Anspruch 6, 7 oder 8,
**dadurch gekennzeichnet,**
**dass** die Hohlprofile (7) in Rahmenausschnitte (9) eingesetzt sind.

10. Rahmen nach Anspruch 6, 7 oder 8,
**dadurch gekennzeichnet,**
**dass** die Hohlprofile (7) zwischen seitlich an die Hohlprofile (7) anstoßenden Rahmenteilen liegen.

11. Rahmen nach einem der Ansprüche 6 bis 10,
**dadurch gekennzeichnet,**
**dass** die Hohlprofile (7) durch Schweißen mit dem Rahmen (1) verbunden sind.

12. Rahmen nach einem der Ansprüche 6 bis 11,
**dadurch gekennzeichnet,**
**dass** die Hohlprofile (7) durch Verschraubungen mit dem Rahmen(1) verbunden sind.

13. Rahmen nach einem der Ansprüche 6 bis 12,
**dadurch gekennzeichnet,**
**dass** die Oberfläche des aus körperschalldämmendem Material bestehenden Blocks (8) aggregatelagerseitig mit einer Distanzplatte (10) versehen ist, die das Hohlprofil (8) berührungslos überragt.

14. Verfahren zur Herstellung eines Rahmens nach einem der Ansprüche 6 bis 12,
**dadurch gekennzeichnet,**
**dass** das körperschalldämmende Material in die Hohlprofile (7) eingefüllt wird, bevor die Hohlprofile (7) mit dem Rahmen (1) verbunden werden.

## Claims

1. Frame (1), comprising longitudinal (2) and transverse members (3), for the mounting of units with frame bearings and unit bearings, wherein the frame (1) is mounted on the frame bearings (5) and the unit can be mounted on the frame (1) on unit bearings (12), wherein frame regions are connected to structure-borne sound damping material on which the unit bearings (12) are mounted without direct frame contact, **characterized in that** the frame bearings (5) and the unit bearings (12) are respectively situated perpendicularly one above the other, and **in that** the structure-borne sound damping material is respectively disposed in the form of blocks (8) between frame bearings (5) and unit bearings (12).

2. Frame according to Claim 1, **characterized in that** the dimensions, in particular the height, of the block (8) consisting of structure-borne sound damping material, are sized in accordance with the necessary damping.

3. Frame according to Claim 2 or 3, **characterized in that** the unit bearings (12) are fastened without frame contact detachably to the block (8) made of structure-borne sound damping material.

4. Frame according to one of Claims 1 to 3, **characterized in that** the blocks (8) are formed by the encasement of frame regions with the structure-borne sound damping material.

5. Frame according to Claim 4, **characterized in that** the blocks (8) are disposed in the region of junctions of longitudinal (2) and transverse members (3).

6. Frame according to one of Claims 1 to 3, **characterized in that** the structure-borne sound damping material is filled in metal hollow sections (7), which are integrated in vertically upright arrangement in the frame (1).

7. Frame according to Claim 6, **characterized in that** the hollow sections (7) are formed of an extruded section.

8. Frame according to Claim, 6, **characterized in that** the hollow sections (7) filled with a structure-borne sound damping material are formed of a cast part.

9. Frame according to Claim 6, 7 or 8, **characterized in that** the hollow sections (7) are inserted in frame cutouts (9).

10. Frame according to Claim 6, 7 or 8, **characterized in that** the hollow sections (7) are situated between frame parts butting laterally against the hollow sections (7).

11. Frame according to one of Claims 6 to 10, **characterized in that** the hollow sections (7) are connected to the frame (1) by welding.

12. Frame according to one of Claims 6 to 11, **characterized in that** the hollow sections (7) are connected to the frame (1) by screw joints.

13. Frame according to one of Claims 6 to 12, **characterized in that** the surface of the block (8) consisting of structure-borne sound damping material is provided on the unit bearing side with a distance plate (10), which surmounts the hollow section (8) in a contact-free manner.

14. Method for manufacturing a frame according to one of Claims 6 to 12, **characterized in that** the structure-borne sound damping material is filled into the hollow sections (7) before the hollow sections (7) are connected to the frame (1).

## Revendications

1. Châssis (1) constitué de longerons (2) et de traverses (3) destiné à supporter des unités, comportant des supports de châssis et des supports d'unité, le châssis (1) étant logé sur les supports de châssis (5) et l'unité pouvant être logée sur le châssis (1) sur des supports d'unité (12), des zones du châssis étant reliées avec un matériau amortissant le bruit d'impact, sur lequel sont logés les supports d'unité (12) sans contact direct avec le châssis, **caractérisé en ce que** les supports de châssis (5) et les supports d'unité (12) se trouvent chaque fois verticalement l'un au-dessus de l'autre et **en ce que** le matériau amortissant le bruit d'impact est disposé chaque fois en forme de blocs (8) entre les supports de châssis (5) et les supports d'unité (12).

2. Châssis selon la revendication 1, **caractérisé en ce que** les dimensions, en particulier la hauteur, du bloc (8) constitué d'un matériau amortissant le bruit d'impact sont calculées en fonction de l'amortissement requis.

3. Châssis selon la revendication 2 ou 3, **caractérisé en ce que** les supports d'unité (12) sont fixés sans contact avec le châssis de façon amovible au bloc (8) constitué d'un matériau amortissant le bruit d'impact.

4. Châssis selon l'une quelconque des revendications 1 à 3, **caractérisé en ce que** les blocs (8) sont formés par coulée du matériau amortissant le bruit d'impact autour de zones du châssis.

5. Châssis selon la revendication 4, **caractérisé en ce que** les blocs (8) sont disposés dans la zone de noeuds formés par les longerons (2) et les traverses (3).

6. Châssis selon l'une quelconque des revendications 1 à 3, **caractérisé en ce que** le matériau amortissant le bruit d'impact est coulé dans des profilés creux (7) en métal, lesquels sont intégrés verticalement dans le châssis (1).

7. Châssis selon la revendication 6, **caractérisé en ce que** les profilés creux (7) sont formés à partir d'un profilé filé.

8. Châssis selon la revendication 6, **caractérisé en ce que** les profilés creux (7) remplis d'un matériau amortissant le bruit d'impact sont formés à partir d'une pièce coulée.

9. Châssis selon la revendication 6, 7 ou 8, **caractérisé en ce que** les profilés creux (7) sont logés dans des découpes (9) de châssis.

10. Châssis selon la revendication 6, 7 ou 8, **caractérisé en ce que** les profilés creux (7) se trouvent entre des parties du châssis adjacentes latéralement aux profilés creux (7).

11. Châssis selon l'une quelconque des revendications 6 à 10, **caractérisé en ce que** les profilés creux (7) sont reliés au châssis (1) par soudage.

12. Châssis selon l'une quelconque des revendications 6 à 11, **caractérisé en ce que** les profilés creux (7) sont reliés au châssis (1) par vissage.

13. Châssis selon l'une quelconque des revendications 6 à 12, **caractérisé en ce que** la surface du bloc (8) constitué d'un matériau amortissant le bruit d'impact est pourvue du côté supportant l'unité d'une plaque d'écartement (10), laquelle dépasse en hauteur le profilé creux (7) sans aucun contact avec celui-ci.

14. Procédé de fabrication d'un châssis selon l'une quelconque des revendications 6 à 12, **caractérisé en ce que** le matériau amortissant le bruit d'impact est coulé dans les profilés creux (7) avant que les profilés creux (7) soient reliés au châssis (1).
